# EUROPÄISCHE PATENTSCHRIFT

(11) **EP 0 869 924 B1**
(45) Veröffentlichungstag und Bekanntmachung des Hinweises auf die Patenterteilung: **19.12.2001**
(21) Anmeldenummer: 96932514.1
(22) Anmeldetag: 12.09.1996
(51) Int. Cl.: C03C 3/072, C03C 8/24

(54) **GLASARTIGE ZUSAMMENSETZUNG**
VITREOUS COMPOSITION
COMPOSITION VITREUSE

(43) Veröffentlichungstag der Anmeldung: 14.10.1998
(73) Patentinhaber: Heraeus Electro-Nite International N.V., 3530 Houthalen (BE)
(72) Erfinder: KIPKA, Annette, D-76149 Karlsruhe (DE); FISCHER, Hagen, D-80336 München (DE)
(74) Vertreter: Kühn, Hans-Christian
(86) Internationale Anmeldenummer: EP9604012
(87) Internationale Veröffentlichungsnummer: WO9811030

(56) Entgegenhaltungen:
- DE-A- 19 509 132
- DE-C- 810 338
- FR-A- 861 370
- US-A- 2 972 544
- US-A- 3 551 171
- CHEMICAL ABSTRACTS, vol. 89, no. 18, 1978 Columbus, Ohio, US; abstract no. 151431, Seite 280; XP002032152 & JP 53 030 617 A (OKUNO CHEMICAL INDUSTRY CO LTD) 23 März 1978

## Beschreibung

Die vorliegende Erfindung betrifft eine glasartige Zusammensetzung, die zur Verwendung als Abdichtmaterial für mineralisolierte elektrische Leitungen geeignet ist, sowie ein Abdichtmaterial, das aus der glasartigen Zusammensetzung besteht.

Mineralisolierte Leitungen bestehen aus als Mantel dienenden Metallrohren, in denen sich ein oder mehrere drahtförmige, niederohmige Adern als Leiter befinden, die allseitig von gut isolierendem mineralischen Pulver umgeben sind, das in den Mantel eingepreßt ist. Sie werden z.B. in der Meß- und Regeltechnik verwendet.

Der Mantel besteht für die Anwendung bei hohen Temperaturen aus oxidations- und korrosionsbeständigem Material, beispielsweise Edelstähle oder Chrom-Nickel-Legierungen. Der Mantelwerkstoff soll sich gut schweißen oder löten lassen und gute mechanische Eigenschaften besitzen.

Die niederohmigen Leiter werden gegeneinander bzw. gegen den Mantel durch mineralische Pulver, wie Magnesiumoxid oder Aluminiumoxid isoliert. Die zur Isolierung eingesetzten Pulver zeichnen sich durch hohe Schmelztemperaturen, beispielsweise oberhalb von 2000°C, und hohe spezifische elektrische Widerstände, beispielsweise 10¹² bis 10¹³ Ohm x m bei 400°C und ca. 10⁸ Ohm x m bei 800°C, aus. Solche Mineralpulver sind jedoch stark hygroskopisch. An einem unverschlossenen Kabelende kann das Pulver schon innerhalb weniger Minuten soviel Feuchtigkeit aus der umgebenden Atmosphäre aufnehmen, daß der Isolationswiderstand zwischen Ader und Mantel bzw. zwischen den Adern um mehrere Zehnerpotenzen abfällt. Aus diesem Grunde ist es erforderlich, daß die Kabelenden zum Schutz vor Feuchtigkeit dauerhaft hermetisch abgeschlossen sind, um den Zutritt von Feuchtigkeit zu verhindern. Dies trifft insbesondere dann zu, wenn an die Adern hochohmige Elemente, beispielsweise Meßfühler in Abgassystemen von Brennkraftmaschinen, angeschlossen werden sollen.

Der feuchtigkeitsdichte Zustand der Leitungen muß durch hermetischen Verschluß der Kabelenden konserviert werden. Bei hochohmigen Anschlußteilen wirken sich elektrische Potentiale infolge von Polarisationseffekten im Glas zwischen den Adern bzw. zwischen Adern und Mantel störend auf die Signalauswertung aus.

Bisher wurden mineralisolierte Leitungen beidseitig mit einem Kunststoff verschlossen, wobei die Innenadern feuchtigkeitsdicht herausgeführt werden, um sie elektrisch kontaktieren zu können.

Da Kunststoffverschlüsse nicht hochtemperaturbeständig sind, können die so verschlossenen Enden mineralisolierter Leitungen nicht bei höheren Temperaturen, beispielsweise oberhalb von 350°C, eingesetzt werden. Es ist deshalb auch schon vorgeschlagen worden, Keramikteile zur Abdichtung der Enden der Mantelrohre, die höheren Temperaturen ausgesetzt werden, zu verwenden. Der Einsatz solcher Keramikteile erfordert aber ein sehr formgenaues Arbeiten, um eine effektive Abdichtung der Mantelrohrenden zu bewirken.

Es ist deshalb versucht worden, mineralisolierte Leitungen durch glasartige Zusammensetzungen zu verschließen. Diese glasartigen Zusammensetzungen sind aber in ihrem Isolationsverhalten bei höheren Temperaturen, insbesondere Temperaturen oberhalb von 400°C, unbefriedigend.

Aufgabe der vorliegenden Erfindung ist es, glasartige Zusammensetzungen zu schaffen, die als Abdichtmaterialien für Mantelrohrenden, insbesondere von mineralisolierten Leitungen, geeignet sind, die auch bei höheren Temperaturen bis 600°C noch gute Isolationseigenschaften aufweisen.

Gelöst wird diese Aufgabe durch eine glasartige Zusammensetzung gemäß dem Hauptanspruch, dessen Verwendung sowie durch ein daraus geschaffenes Abdichtmaterial. Die Unteransprüche geben bevorzugte Ausgestaltungen der Erfindung wieder.

Die erfindungsgemäßen Zusammensetzungen können als Verschlußmaterialien dienen, die es ermöglichen, die Verschlüsse von mineralisolierten elektrischen Leitungen auch unter Bedingungen einzusetzen, bei denen hohe Temperaturen vorkommen können, beispielsweise in Abgasanlagen von Kraftfahrzeugen. Die erfindungsgemäßen Zusammensetzungen ermöglichen auch unter diesen Bedingungen einen völlig feuchtigkeitsdichten Abschloß der mineralisolierten Leitungen. Die spezifischen Isolationswiderstände können dabei Werte von mehr als 10 MOhm x cm bei Temperaturen von 600°C überschreiten. Zwischen den Adern der mineralisolierten Leitungen bzw. zwischen Ader und Mantel treten keine oder nur sehr geringe elektrische Störpotentiale auf. Die Materialien sind bei Temperaturen von bis zu 650°C sowohl in neutraler als auch in saurer Atmosphäre beständig, was wichtig ist für die Verwendung dieser Materialien in Abgassystemen. Sie weisen eine hohe Alterungsbeständigkeit und mechanische Stabilität auf. Der Verschluß ist insbesondere auch nach Schwingungsbeanspruchung frei von mechanischen Schädigungen und feuchtigkeitsdicht. Auch bei krassen Temperaturwechseln bleiben diese guten Eigenschaften erhalten.

Die erste erfindungsgemäße Zusammensetzung besteht aus folgenden Bestandteilen:
20 - 35 Gew.-Teile SiO₂
15 - 20 Gew.-Teile B₂O₃
30 - 35 Gew.-Teile BaO
20 - 25 Gew.-Teile PbO
0 - 10 Gew.-Teile CaO
   unter
0,1 Gew.-Teile Alkalimetalloxide.

Insbesondere bevorzugt sind die folgenden Zusammensetzungen:
26 - 28 Gew.-Teile SiO₂
15 - 17 Gew.-Teile B₂O₃
32 - 34 Gew.-Teile BaO
23 - 25 Gew.-Teile PbO
0 - 1 Gew.-Teile CaO
   unter
0,01 Gew.-Teile Alkalimetalloxide.

Eine zweite erfindungsgemäße Zusammensetzung besteht aus folgenden Bestandteilen:
20 - 35 Gew.-Teile SiO₂
10 - 25 Gew.-Teile B₂O₃
2 - 12 Gew.-Teile TiO₂
30 - 40 Gew.-Teile PbO
0 - 35 Gew.-Teile BaO
0 - 6 Gew.-Teile CaO
   unter
0,1 Gew.-Teile Alkalimetalloxide.

Insbesondere bevorzugt ist hierbei die folgende Zusammensetzung:
33 - 35 Gew.-Teile SiO₂
23 - 25 Gew.-Teile B₂O₃
9 - 11 Gew.-Teile TiO₂
31 - 33 Gew.-Teile PbO
0 - 1 Gew.-Teile CaO
   unter
0,01 Gew.-Teile Alkalimetalloxide.

Mit den erfindungsgemäßen Zusammensetzungen werden hohe spezifische Widerstände erzielt, wobei die Ausdehnungskoeffizienten sich an die Ausdehnungskoeffizienten der Leiter bzw. Mantelrohre anpassen lassen, so daß es auch bei Temperaturwechsel nur zu geringen thermischen Spannungen kommt. Dabei werden die Ausdehnungskoeffizienten der Abdichtmassen so eingestellt, daß sie kleiner sind als der Ausdehnungskoeffizient der verwendeten Mantelrohre.

Wird der Ausdehnungskoeffizient des Glasverschlusses kleiner eingestellt als der Ausdehnungskoeffizient des Mantels, so wird nach der Abkühlung des flüssig aufgeschmolzenen Glasverschlusses eine äußere Kraft von dem stärker schrumpfenden Mantel auf den Glasverschluß ausgeübt. Dies führt zu einem Preßsitz des Glasverschlusses zwischen dem Mantel und einer bzw. mehreren Adern.

In einer besonderen Ausführungsform können die Enden der mineralisolierten Leitungen auch mit einem keramischen Formteil verschlossen werden, das Öffnungen für die durchzuführenden Adern aufweist. Dieses keramische Formteil kann an den Enden über die Adern geschoben und in den Mantel eingeführt werden oder diesen umschließen. Dort kann es dann vorzugsweise mit den erfindungsgemäßen glasartigen Zusammensetzungen abgedichtet werden. Diese Ausführungsform ist besonders unempfindlich gegen an den herausgeführten Adem angreifenden seitlichen mechanischen Belastungen und Biegekräften.

Die Erfindung wird nachfolgend anhand der Figurenbeschreibung und der Beispiele näher erläutert. Es zeigen:
- Figur 1: eine mineralisolierte Leitung in teilweise aufgeschnittener Form mit einer Ader;
- Figur 2: einen Schnitt durch die mineralisolierte Leitung der Figur 1;
- Figur 3: ein keramisches Formteil zum Abdichten einer mineralisolierten Leitung mit vier Adern in einer Ansicht von oben;
- Figur 4: das Formteil der Figur 3 in einer Seitenansicht;
- Figur 5: eine grafische Darstellung der Widerstandswerte der Tabelle 1.

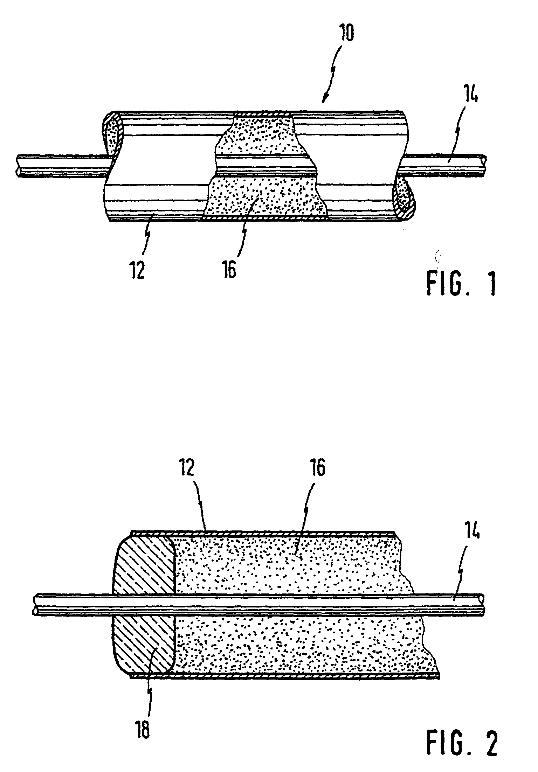

Figuren 1 und 2 zeigen die mineralisolierte Leitung 10, die einen äußeren Mantel 12 aufweist, der aus einem Metallrohr besteht. Zentral innerhalb dieses Mantels ist eine Ader 14 als elektrische Leitung angeordnet, die von einem mineralischen Pulver 16 allseitig umgeben ist.

Am offenen Ende der mineralisolierten Leitung ist dieses durch einen Glasverschluß verschlossen, der aus den erfindungsgemäßen glasartigen Zusammensetzungen besteht.

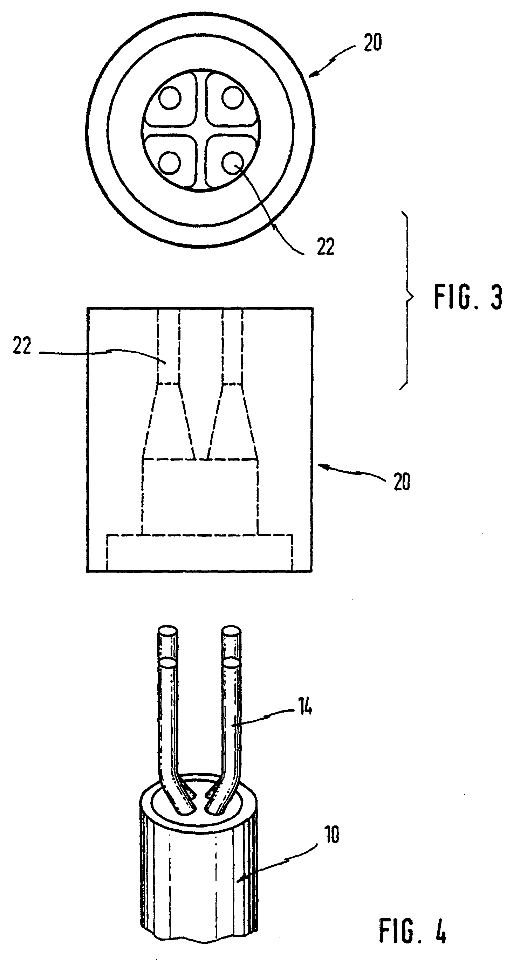

Fig. 3 zeigt ein keramisches Formteil 20 in Form eines zylindrischen Keramikkörpers, der insgesamt vier öffnungen 22 zur Durchführung von vier Adern 14 aufweist. Das keramische Formteil ist in der Fig. 4 in einer Seitenansicht dargestellt. Es kann auf die aus der mineralisolierten Leitung 10 herausragenden Adern 14 aufgeschoben und auf die offene Seite der mineralisolierten Leitung aufgeschoben werden und wird dort mit einem Glasverschluß aus den erfindungsgemäßen Glaszusammensetzungen abgedichtet.

Wird der Ausdehnungskoeffizient des Glasverschlusses 18 kleiner eingestellt als der Ausdehnungskoeffizient des Mantels 12, so wird nach der Abkühlung des flüssig aufgeschmolzenen Glasverschlusses eine äußere Kraft von dem stärker schrumpfenden Mantel 12 auf den Glasverschluß 18 ausgeübt. Dies führt zu einem Preßsitz des Glasverschlusses 18 zwischen dem Mantel 12 und dem bzw. den Ader(n) 14.

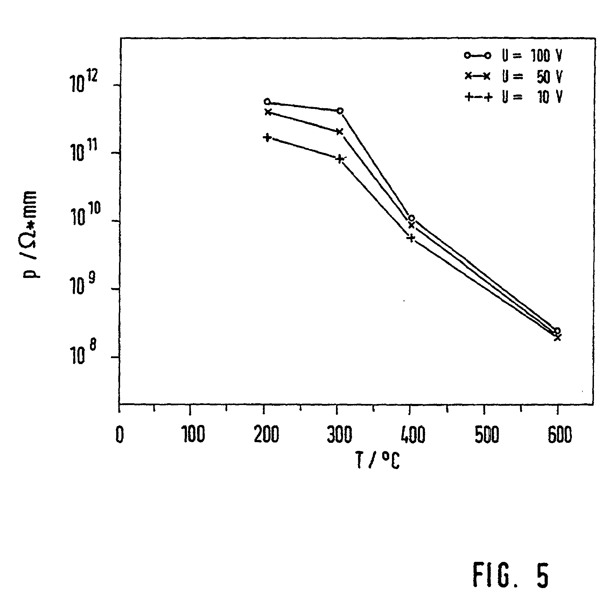

Figur 5 zeigt eine grafische Darstellung der Ergebnisse der Tabelle 1.

### Beispiel 1

Herstellung einer mineralisolierten elektrischen Leitung gemäß Figur 1.

Figur 1 zeigt einen Querschnitt durch eine mineralisolierte elektrische Leitung mit einer Ader. Die Ader und der Mantel bestehen aus der Legierung Inconel ® 600. Die Ader ist gegenüber dem Mantel durch MgO isoliert. Der Verschluß der mineralisolierten Leitung wurde wie folgt hergestellt:

Das eine Ende des Mantelwerstoffes wurde bei einer Temperatur von 650 °C voroxidiert, bis eine deutliche Oxidationsschicht erkennbar war. Dann wurde das Glas in Pulverform in das voroxidierte Ende eingebracht. Das Pulver hatte die folgende Zusammensetzung:
27 Gew.-% SiO₂
16 Gew.-% B₂O₃
33 Gew.-% BaO
24 Gew.-% PbO.

Das voroxidierte Ende wurde in einen Ofen eingebracht und das Glas sechs Minuten bei einer Temperatur von 975 °C geschmolzen. Anschließend wurde an ruhender Luft auf Raumtemperatur abgekühlt.

Das andere Ende wurde mit Epoxidharz nach vorangegangenem Trocknen der gesamten Leitung bei 400 °C über einen Zeitraum von fünf Stunden verschlossen.

Das auf diese Weise mit dem Glas verschlossene Ende hat einen Isolationswiderstand Ader zu Mantel bei 600 °C von mehr als 20 MOhm.

Die bei unterschiedlichen Temperaturen im Bereich von 200 bis 600 °C und bei Gleichspannungen von 10 V, 50 V und 100 V zwischen der Ader und dem Mantel im Bereich der glasartigen Zusammensetzung gemessen Isolationswiderstände R sind in der folgenden Tabelle 1 zusammengestellt und in Figur 5 grafisch dargestellt.

**TABELLE 1**

| Temperatur R bei | | bei | bei |
|---|---|---|---|
| °C | U = 10 V | U = 50 V | U = 100 V |
| 200 | 1,7x10¹¹Ohm mm | 4,1x10¹¹Ohm mm | 5,7x10¹¹Ohm mm |
| 300 | 8,5x10¹⁰Ohm mm | 2,1x 10¹¹Ohm mm | 4,2x10¹¹Ohm mm |
| 400 | 5,7x10⁹Ohm mm | 9,3x10⁹Ohm mm | 1,1x10¹⁰Ohm mm |
| 600 | 2,1x10⁸Ohm mm | 2,1x10⁸Ohm mm | 2,3x10⁸Ohm mm |

Die zwischen Ader und Mantel gemessenen elektrischen Potentiale sind bei 600 °C kleiner als 30 mV.

### BEISPIEL 2

Das Einbringen der Glasverschlußmasse in das voroxidierte Ende einer Leitung mit vier Adern erfolgt wie im Beispiel 1. Dann wird ein keramisches Formteil gemäß Figur 3 und 4 auf das voroxidierte Ende aufgeschoben. Das Formteil besitzt vier Durchführungen für die Adem.

Das Trocknen, Einbringen des voroxidierten Endes in den Ofen, Einschmelzen, Abkühlen sowie das Verschließen des anderen Endes der Leitung erfolgt wie im Beispiel 1.

Die Isolationswiderstände Ader zu Mantel beziehungsweise Ader zu Ader im Bereich des Glasverschlusses liegen bei 600 °C oberhalb 20 MOhm, die gemessenen elektrischen Potentiale bei 600 °C unterhalb von 30 mV.

Das eingesetzte Glaspulver hatte die folgende Zusammensetzung:
27 Gew.-% SiO₂
16 Gew.-% B₂O₃
33 Gew.-% BaO
24 Gew.-% PbO.

### BEISPIEL 3

Herstellung eines Glasverschlusses gemäß Figur 3 mit einer Glaspaste.

Figur 3 zeigt einen Querschnitt durch eine mineralisolierte elektrische Leitung mit vier Adern. Die Ader und der Mantel bestehen aus der Legierung Inconel ® 600. Die Ader ist gegenüber dem Mantel durch MgO isoliert. Der Verschluß der mineralisolierten Leitung wurde wie folgt hergestellt:

Das eine Ende des Mantelwerkstoffes wurde bei einer Temperatur von 650 °C voroxidiert, bis eine deutliche Oxidationsschicht erkennbar war. Dann wurde das Glas in Pastenform in das voroxidierte Ende eingebracht. Die Paste hatte die folgende Zusammensetzung:
75 Gew.-% Glaspulver
25 Gew.-% organischer Pastengrundstoff

Das Glaspulver hat die gleiche Zusammensetzung wie im Beispiel 2.

Der Pastengrundstoff besteht aus
55 Gew. % Glyzerin
44 Gew. % Wasser
0,5 Gew. % Metylzellulose
0,5 Gew. % Amidosulfonsäure

Die Paste wurde zwanzig Minuten bei 125 °C getrocknet. Dann wurde das voroxidierte Ende in einen Ofen eingebracht und das Glass sechs Minuten bei einer Temperatur von 975 °C geschmolzen. Anschließend wurde an ruhender Luft auf Raumtemperatur abgekühlt.

Das andere Ende wurde mit Epoxidharz nach vorangegangenem Trocknen der gesamten Leitung bei 400 °C über einen Zeitraum von fünf Stunden verschlossen.

Das auf diese Weise mit dem Glas verschlossene Ende hat einen Isolationswiderstand Ader zu Ader bzw. Ader zu Mantel bei 600 °C von mehr als 20 MOhm.

Die zwischen den Adern bzw. zwischen einer Ader und dem Mantel gemessenen Potentiale sind bei 600 °C kleiner als 30 mV.

## Patentansprüche

1. Glasartige Zusammensetzung, bestehend aus folgenden Bestandteilen:
20 - 35 Gew.-Teile SiO₂
15 - 20 Gew.-Teile B₂O₃
30 - 35 Gew.-Teile BaO
20 - 25 Gew.-Teile PbO
0 - 10 Gew.-Teile CaO
unter
0,1 Gew.-Teile Alkalimetalloxide,

2. Glasartige Zusammensetzung nach Anspruch 1 der Zusammensetzung:
26 - 28 Gew.-Teile SiO₂
15 - 17 Gew.-Teile B₂O₃
32 - 34 Gew.-Teile BaO
23 - 25 Gew.-Teile PbO
0 - 1 Gew.-Teile CaO
unter
0,01 Gew.-Teile Alkalimetalloxide.

3. Glasartige Zusammensetzung, bestehend aus folgenden Bestandteilen:
20 - 35 Gew.-Teile SiO₂
10 - 25 Gew.-Teile B₂O₃
2 - 12 Gew.-Teile TiO₂
30 - 40 Gew.-Teile PbO
0 - 35 Gew.-Teile BaO
0 - 6 Gew.-Teile CaO
unter
0,1 Gew.-Teile Alkalimetalloxide.

4. Glasartige Zusammensetzung nach Anspruch 3 der Zusammensetzung:
33 - 35 Gew.-Teile SiO₂
23 - 25 Gew.-Teile B₂O₃
9 - 11 Gew.-Teile TiO2
31 - 33 Gew.-Teile PbO
0 - 1 Gew.-Teile CaO
unter
0,01 Gew.-Teile Alkalimetalloxide.

5. Verwendung der glasartigen Zusammensetzung nach einem der Ansprüche 1 bis 4 als Abdichtmaterial für mineralisolierte elektrische Leitungen.

6. Abdichtmaterial für mineralisolierte elektrische Leitungen, **gekennzeichnet durch** die folgende Zusammensetzung:
20 - 35 Gew.-Teile SiO₂
15 - 20 Gew.-Teile B₂O₃
30 - 35 Gew.-Teile BaO
20 - 25 Gew.-Teile PbO
0 -10 Gew.-Teile CaO
unter
0,1 Gew.-Teile Alkalimetalloxide.

7. Abdichtmaterial nach Anspruch 6, **gekennzeichnet durch** die folgende Zusammensetzung:
26 - 28 Gew.-Teile SiO₂
15 - 17 Gew.-Teile B₂O₃
32 - 34 Gew.-Teile BaO
23 - 25 Gew.-Teile PbO
0 - 1 Gew.-Teile CaO
unter
0,01 Gew.-Teile Alkalimetalloxide.

8. Abdichtmaterial für mineralisolierte elektrische Leitungen, **gekennzeichnet durch** die folgende Zusammensetzung:
20 - 35 Gew.-Teile SiO₂
10 - 25 Gew.-Teile B₂O₃
2 - 12 Gew.-Teile TiO₂
30 - 40 Gew.-Teile PbO
0 - 35 Gew.-Teile BaO
0 - 6 Gew.-Teile CaO
unter
0,1 Gew.-Teile Alkalimetalloxide.

9. Abdichtmaterial nach Anspruch 8, **gekennzeichnet durch** die folgende Zusammensetzung:
33 - 35 Gew.-Teile SiO₂
23 - 25 Gew.-Teile B₂O₃
9 - 11 Gew.-Teile TiO2
31 - 33 Gew.-Teile PbO
0 - 1 Gew.-Teile CaO
unter
0,01 Gew.-Teile Alkalimetalloxide.

10. Mineralisolierte elektrische Leitung, enthaltend ein metallisches Mantelrohr, ein isolierendes mineralisches Pulver im Mantelrohr, mindestens einen niederohmigen elektrischen Leiter in dem mineralischen Pulver und an zumindest einem Ende der mineralisolierten elektrischen Leitung ein Abdichtmaterial nach einem der Ansprüche 6 bis 9.

11. Mineralisolierte elektrische Leitung, enthaltend ein metallisches Mantelrohr, ein isolierendes mineralisches Pulver im Mantelrohr, mindestens einen niederohmigen elektrischen Leiter in dem mineralischen Pulver und an zumindest einem Ende der mineralisolierten elektrischen Leitung ein Abdichtmaterial nach einem der Ansprüche 6 bis 9, dessen Ausdehnungskoeffizient kleiner ist als der Ausdehnungskoeffizient des metallischen Mantelrohres.

## Claims

1. Vitreous composition, consisting of the following components:
20 - 35 parts by weight of SiO₂
15 - 20 parts by weight of B₂O₃
30 - 35 parts by weight of BaO
20 - 25 parts by weight of PbO
0 - 10 parts by weight of CaO
less than
0.1 part by weight of alkali metal oxides.

2. Vitreous composition according to Claim 1, having the composition:
26 - 28 parts by weight of SiO₂
15 - 17 parts by weight of B₂O₃
32 - 34 parts by weight of BaO
23 - 25 parts by weight of PbO
0 - 1 part by weight of CaO
less than
0.01 part by weight of alkali metal oxides.

3. Vitreous composition, consisting of the following components:
20 - 35 parts by weight of SiO₂
10 - 25 parts by weight of B₂O₃
2 - 12 parts by weight of TiO₂
30 - 40 parts by weight of PbO
0 - 35 parts by weight of BaO
0 - 6 parts by weight of CaO
less than
0.1 part by weight of alkali metal oxides.

4. Vitreous composition according to Claim 3, having the composition:
33 - 35 parts by weight of SiO₂
23 - 25 parts by weight of B₂O₃
9 - 11 parts by weight of TiO₂
31 - 33 parts by weight of PbO
0 - 1 part by weight of CaO
less than
0.01 part by weight of alkali metal oxides.

5. Use of the vitreous composition according to any of Claims 1 to 4 as sealing material for mineral-insulated electrical cables.

6. Sealing material for mineral-insulated electrical cables, **characterized by** the following composition:
20 - 35 parts by weight of SiO₂
15 - 20 parts by weight of B₂O₃
30 - 35 parts by weight of BaO
20 - 25 parts by weight of PbO
0 - 10 parts by weight of CaO
less than
0.1 part by weight of alkali metal oxides.

7. Sealing material according to Claim 6, **characterized by** the following composition:
26 - 28 parts by weight of SiO₂
15 - 17 parts by weight of B₂O₃
32 - 34 parts by weight of BaO
23 - 25 parts by weight of PbO
0 - 1 part by weight of CaO
less than
0.01 part by weight of alkali metal oxides.

8. Sealing material for mineral-insulated electrical cables, **characterized by** the following composition:
20 - 35 parts by weight of SiO₂
10 - 20 parts by weight of B₂O₃
2 - 12 parts by weight of TiO₂
30 - 40 parts by weight of PbO
0 - 35 parts by weight of BaO
0 - 6 parts by weight of CaO
less than
0.1 part by weight of alkali metal oxides.

9. Sealing material according to Claim 8, **characterized by** the following composition:
33 - 35 parts by weight of SiO₂
23 - 25 parts by weight of B₂O₃
9 - 11 parts by weight of TiO₂
31 - 33 parts by weight of PbO
0 - 1 part by weight of CaO
less than
0.01 part by weight of alkali metal oxides.

10. Mineral-insulated electrical cable, comprising a metallic sheath, an insulating mineral powder in the sheath, at least one low-resistance electrical conductor in the mineral powder and, at at least one end of the mineral-insulated electrical cable, a sealing material according to any of Claims 6 to 9.

11. Mineral-insulated electrical cable, comprising a metallic sheath, an insulating mineral powder in the sheath, at least one low-resistance electrical conductor in the mineral powder and, at at least one end of the mineral-insulated electrical cable, a sealing material according to any of Claims 6 to 9 whose coefficient of expansion is less than the coefficient of expansion of the metallic sheath.

## Revendications

1. Composition vitreuse consistant en les constituants suivants :
20 - 35 parties en masse de SiO₂
15 - 20 parties en masse de B₂O₃
30 - 35 parties en masse de BaO
20 - 25 parties en masse de PbO
0 - 10 parties en masse de CaO
moins de 0,1 partie en masse d'oxydes de métaux alcalins.

2. Composition vitreuse selon la revendication 1 de composition :
26 - 28 parties en masse de SiO₂
15 - 17 parties en masse de B₂O₃
32 - 34 parties en masse de BaO
23 - 25 parties en masse de PbO
0 - 1 partie en masse de CaO
moins de 0,01 partie en masse d'oxydes de métaux alcalins.

3. Composition vitreuse consistant en les constituants suivants :
20 - 35 parties en masse de SiO₂
10 - 25 parties en masse de B₂O₃
2 - 12 parties en masse de TiO₂
30 - 40 parties en masse de PbO
0 - 35 parties en masse de BaO
0 - 6 parties en masse de CaO
moins de 0,1 partie en masse d'oxydes de métaux alcalins.

4. Composition vitreuse selon la revendication 3 de composition :
33 - 35 parties en masse de SiO₂
23 - 25 parties en masse de B₂O₃
9 - 11 parties en masse de TiO₂
31 - 33 parties en masse de PbO
0 - 1 partie en masse de CaO
moins de 0,01 partie en masse d'oxydes de métaux alcalins.

5. Utilisation de la composition vitreuse selon l'une des revendications 1 à 4 comme matériau d'étanchéité pour conduites électriques isolées par des minéraux.

6. Matériau d'étanchéité pour conduites électriques isolées par des minéraux, **caractérisé par** la composition suivante :
20 - 35 parties en masse de SiO₂
15 - 20 parties en masse de B₂O₃
30 - 35 parties en masse de BaO
20 - 25 parties en masse de PbO
0 - 10 parties en masse de CaO
moins de 0,1 partie en masse d'oxydes de métaux alcalins.

7. Matériau d'étanchéité selon la revendication 6, **caractérisé par** la composition suivante :
26 - 28 parties en masse de SiO₂
15 - 17 parties en masse de B₂O₃
32 - 34 parties en masse de BaO
23 - 25 parties en masse de PbO
0 - 1 partie en masse de CaO
moins de 0,01 partie en masse d'oxydes de métaux alcalins.

8. Matériau d'étanchéité pour conduites électriques isolées par des minéraux, **caractérisé par** la composition suivante :
20 - 35 parties en masse de SiO₂
10 - 25 parties en masse de B₂O₃
2 - 12 parties en masse de TiO₂
30 - 40 parties en masse de PbO
0 - 35 parties en masse de BaO
0 - 6 parties en masse de CaO
moins de 0,1 partie en masse d'oxydes de métaux alcalins.

9. Matériau d'étanchéité selon la revendication 8, **caractérisé par** la composition suivante :
33 - 35 parties en masse de SiO₂
23 - 25 parties en masse de B₂O₃
9 - 11 parties en masse de TiO₂
31 - 33 parties en masse de PbO
0 - 1 partie en masse de CaO
moins de 0,01 partie en masse d'oxydes de métaux alcalins.

10. Conduite électrique isolée par des minéraux contenant un tube formant enveloppe métallique, une poudre minérale isolante dans le tube formant enveloppe, au moins un conducteur électrique de basse impédance dans la poudre minérale et, à au moins une extrémité de la conduite électrique isolée par des minéraux, un matériau d'étanchéité selon l'une des revendications 6 à 9.

11. Conduite électrique isolée par des minéraux contenant un tube formant enveloppe métallique, une poudre minérale isolante dans le tube formant enveloppe, au moins un conducteur électrique de basse impédance dans la poudre minérale et, à au moins une extrémité de la conduite électrique isolée par des minéraux, un matériau d'étanchéité selon l'une des revendications 6 à 9, dont le coefficient de dilatation est inférieur au coefficient de dilatation du tube formant enveloppe métallique.
